# EUROPÄISCHE PATENTSCHRIFT

(11) **EP 1 337 712 B1**
(45) Veröffentlichungstag und Bekanntmachung des Hinweises auf die Patenterteilung: **23.02.2005**
(21) Anmeldenummer: 01982489.5
(22) Anmeldetag: 15.11.2001
(51) Int. Cl.: E01C 19/26, E02D 31/00, E02D 17/20

(54) **BODENVERDICHTUNGSMASCHINE**
SOIL COMPACTING MACHINE
MACHINE DE COMPACTAGE DU SOL

(30) Priorität: 27.11.2000 DE 20020088 U
(43) Veröffentlichungstag der Anmeldung: 27.08.2003
(73) Patentinhaber: Vibromax Bodenverdichtungsmaschinen GmbH, 06466 Gatersleben (DE)
(72) Erfinder: AUF DER SPRINGE, Hermann, 45894 Gelsenkirchen (DE); GOTTSCHLING, Hans, 40595 Düsseldorf (DE)
(74) Vertreter: Preissner, Nicolaus, Dipl.-Ing.
(86) Internationale Anmeldenummer: PCT/EP2001/013247
(87) Internationale Veröffentlichungsnummer: WO 2002/042563

(56) Entgegenhaltungen:
- EP-A- 0 935 024
- FR-E- 81 060
- US-A- 4 505 356

## Beschreibung

Die vorliegende Erfindung betrifft eine Bodenverdichtungsmaschine, die mit einem Fahrstand versehen ist, der zwei nebeneinander angeordnete, drehbare Fahrersitze und zwei schwenkbar angeordnete Lenkeinrichtungen aufweist. Die Bodenverdichtungsmaschine ist ferner mit zwei Walzen versehen, die jeweils in einem mit dem Fahrstand verbundenen Rahmen drehbar gelagert sind.

Bei Bodenverdichtungsmaschinen wie sie z.B. aus der WO 99/49139 bekannt sind, muss die Walze häufig sehr genau entlang einer vorgegebenen Linie verfahren werden. Im allgemeinen wird dies von dem Bediener visuell überprüft. Auf Grund der Breite der Bodenverdichtungsmaschine kann diese Überprüfung allerdings nicht von der Mitte des Fahrstands, sondern nur von dessen Rand aus vorgenommen werden. Bei bekannten Bodenverdichtungsmaschinen ist daher an jeder Seite des Fahrstands eine Lenkeinrichtung vorgesehen. Da viele Bodenverdichtungsmaschinen für einen Betrieb in beide Fahrrichtungen ausgelegt werden, müssen sowohl an der Vorderseite als auch an der Rückseite des Fahrstands diese zwei Lenkeinrichtungen angeordnet werden. Es ergibt sich daher ein hoher konstruktiver Aufwand mit insgesamt vier Lenkeinrichtungen.

Im Unterschied hierzu ist aus der US-A-4 505 356 eine gattungsgemässe Bodenverdichtungsmaschine bekannt, die mit einem zwei drehbar angeordnete Fahrersitze aufweisenden Fahrstand versehen ist. Auf dem Fahrstand sind zwei in Längsrichtung der als Tandemwalze ausgebildeten Bodenverdichtungsmaschine gegenüberliegend angeordnete Lenkeinrichtungen vorgesehen, die jeweils ein an einem Schwenkarm angeordnetes Lenkrad aufweisen. Der Schwenkarm lässt sich um eine horizontale Achse zwischen den Fahrersitzen vertikal schwenken. Auf diese Weise ergeben sich bei zwei Fahrersitzen und zwei Lenkeinrichtungen insgesamt vier Arbeitspositionen auf dem Fahrstand. Als Nachteil bei der bekannten Bodenverdichtungsmaschine hat sich das Schwenken des Schwenkarms um eine horizontale Achse erwiesen, da dies mit einem verhältnismässig hohen Kraftaufwand bei der Bedienung verbunden ist. Als unbefriedigend in Hinsicht auf eine hohe Manövrierfähigkeit hat sich ferner erwiesen, dass die bekannte Tandemwalze über eine Doppeldrehschemellenkung verfügt.

Weiterhin wird in der FR-A-2 289 812 eine Gelenkverbindung beschrieben, die für unterschiedliche Fahrzeuge Anwendung findet. Die Gelenkverbindung dient dazu, eine vordere Karosserie mit einer hinteren Karosserie eines Fahrzeugs zu verbinden. Zu diesem Zweck weist die Gelenkverbindung ein zentrales Glied auf, das mit zwei vertikalen Gelenken und einem horizontalen Gelenk versehen ist. Die bekannte Gelenkverbindung stellt ein Knickgelenk dar, das eine vergleichsweise hohe Manövrierfähigkeit gewährleistet.

**Aufgabe** der vorliegenden Erfindung ist es, eine Bodenverdichtungsmaschine bereitzustellen, die bei geringem Aufwand und einfacher Konstruktion eine hohe Flexibilität und eine Vielzahl von Bedienpositionen bereitstellt.

Diese Aufgabe wird durch eine Bodenverdichtungsmaschine mit den Merkmalen gemäss Anspruch 1 **gelöst**.

Vorteilhafte Ausgestaltungen der erfindungsgemässen Bodenverdichtungsmaschine werden in den Ansprüchen 2 bis 5 definiert.

Die erfindungsgemäss vorgesehene, in einer horizontalen Ebene schwenkbare Lenkeinrichtung ermöglicht einen Wechsel der Bedienposition von einer Seite des Fahrstands zur anderen. Die Lenkeinrichtung wird dann von der einen zur anderen Seite verschwenkt. Falls die Bodenverdichtungsmaschine nur für den Arbeitseinsatz in einer Fahrtrichtung ausgelegt ist, ist daher nur eine einzige Lenkeinrichtung erforderlich. Aufbau und Konstruktion werden wesentlich vereinfacht. Gleichzeitig ergibt sich eine hohe Flexibilität.

Von den zwei Lenkeinrichtungen kann die eine an der Vorderseite und die andere an der Rückseite des Fahrstands angeordnet sein. Die Bodenverdichtungsmaschine kann dann Arbeiten sowohl in Vorwärts- als auch in Rückwärtsrichtung ausführen, wobei der Bediener immer in die Fahrtrichtung schauen kann.

Die zwei nebeneinander angeordneten Fahrersitze sind drehbar und/oder in Seitenrichtung des Fahrstands verstellbar. Es sind somit nur zwei Fahrersitze und nur zwei Lenkeinrichtungen erforderlich, um mindestens vier Bedienpositionen zu ermöglichen. Durch die Schwenkbarkeit der Fahrersitze kann ein Arbeiten sowohl in Vorwärts- als auch in Rückwärtsrichtung realisiert werden. Die zugehörige Lenkeinrichtung wird dann zu dem gewünschten Fahrersitz verschwenkt.

Die zwei Walzen sind über je ein Knickgelenk mit dem Fahrstand schwenkbar verbunden. Die Verwendung von zwei schwenkbaren Walzen ermöglicht einen geringen Wendekreis der Bodenverdichtungsmaschine. Da die Walzen gleichzeitig und unabhängig voneinander schwenkbar sind, wird eine wesentliche Erhöhung der Flexibilität der Bodenverdichtungsmaschine erreicht.

Vorteilhaft ist die Lenkeinrichtung in mindestens zwei Schwenklagen arretierbar. Eine unerwünschte Betätigung während des Arbeitseinsatzes wird ausgeschlossen.

In vorteilhafter Weiterbildung ist die Lenkeinrichtung über einen horizontal angeordneten Schwenkarm an einem Bedienpult des Fahrstands angelenkt. Die wesentlichen Anzeigen sind in das Bedienpult integriert und werden nicht verschwenkt. Hierdurch wird die zu verschwenkende Masse verringert und dadurch die Bedienbarkeit verbessert.

In vorteilhafter Ausgestaltung ist zwischen den Fahrersitzen ein Fahrhebel angeordnet. Der Fahrhebel kann von beiden Fahrersitzen aus unabhängig von deren Position bedient werden. Es ist daher für sämtliche Bedienpositionen nur ein einziger Fahrhebel erforderlich, so dass die Konstruktion weiter vereinfacht wird.

Nachstehend wird die Erfindung an Hand eines Ausführungsbeispiels näher beschrieben, das in schematischer Weise in der Zeichnung dargestellt ist. Dabei zeigt:
- Fig. 1: eine schematische Seitenansicht einer Bodenverdichtungsmaschine;
- Fig. 2: eine Draufsicht auf den Fahrstand der Bodenverdichtungsmaschine gemäss Fig. 1;
- Fig. 3: eine Ansicht entsprechend dem Pfeil III in Fig. 2 und
- Fig. 4 bis 6: unterschiedliche Arbeitspositionen der Bodenverdichtungsmaschine in der Draufsicht.

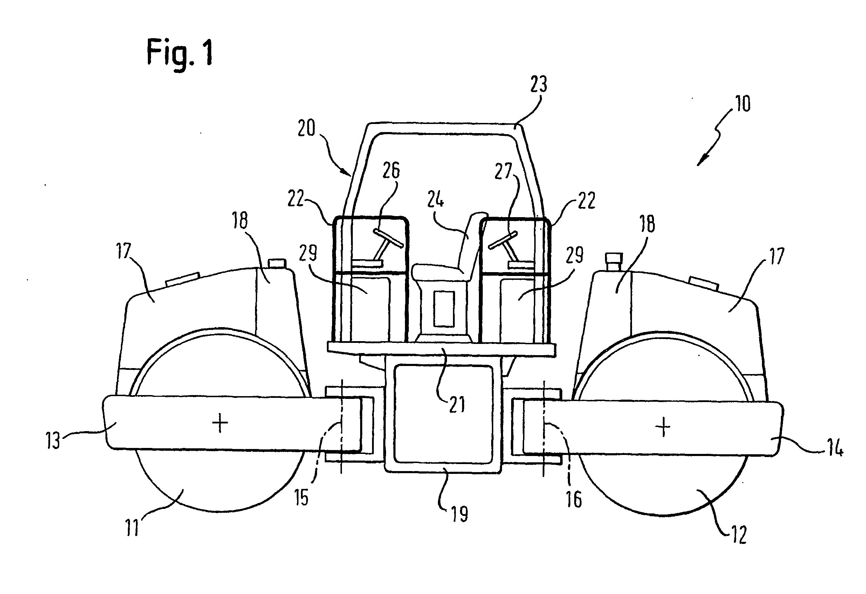

In Fig. 1 ist eine Bodenverdichtungsmaschine in Form einer Tandemwalze 10 mit zwei Walzen 11, 12 dargestellt. Die Walzen 11, 12 sind in Rahmen 13, 14 drehbar gelagert, die über ein Knickgelenk 15, 16 mit einer Motorgondel 19 eines Fahrstands 20 verbunden sind. Oberhalb der Walzen 11, 12 sind Tanks 17 für Wasser und Tanks 18 für Hydrauliköl und Brennstoff angeordnet.

Der Fahrstand 20 weist eine Plattform 21 auf, die elastisch an einem Maschinenrahmen befestigt ist. An der Unterseite des Maschinenrahmens ist die Motorgondel 19 befestigt. Auf der Plattform 21 sind Geländer 22 und ein Überrollschutz oder eine ROPS-Kabine 23 befestigt.

Es sind weiter zwei Sitze 24, 25 sowie zwei horizontal schwenkbare Lenkräder 26, 27 vorgesehen.

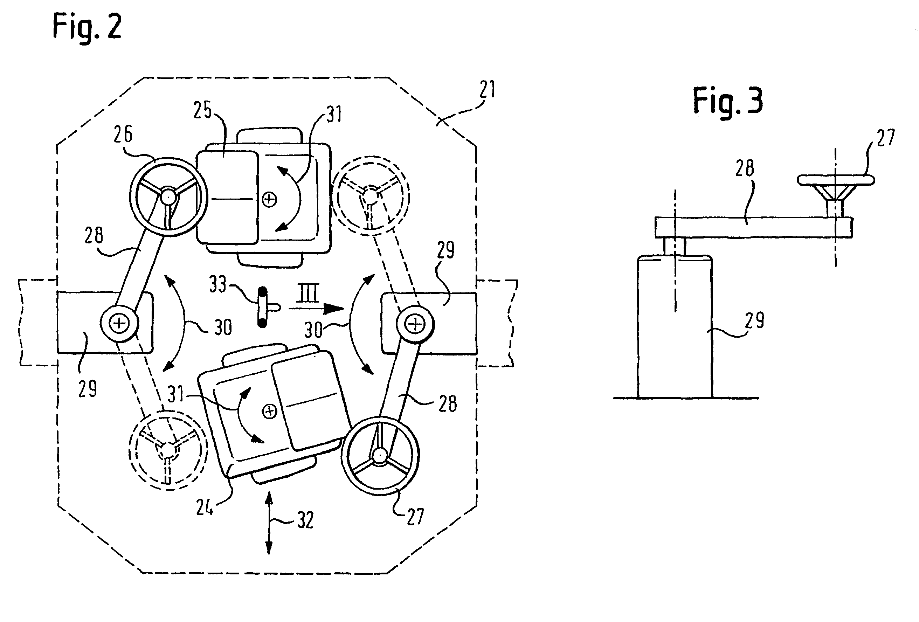

Figur 2 zeigt eine vergrößerte, schematische Draufsicht auf den Fahrstand 20 mit seiner Plattform 21. Figur 3 zeigt eine Ansicht entsprechend dem Pfeil III in Figur 2. Die Lenkräder 26, 27 sind über je einen horizontal angeordneten Schwenkarm 28 an einem Bedienpult 29 angelenkt. In jedes Bedienpult 29 sind nicht näher dargestellte Anzeigen integriert. Die Lenkräder 26, 27 sind gemäß Pfeilrichtung 30 schwenkbar und zumindest in den beiden dargestellten Positionen arretierbar.

Die beiden Fahrersitze 24, 25 sind gemäß Pfeilrichtung 31 drehbar. Der in Figur 2 untere Sitz 24 ist darüber hinaus gemäß Pfeilrichtung 32 in Seitenrichtung des Fahrstands 20 verstellbar. Zwischen den Fahrersitzen 24, 25 ist ein gemeinsamer Fahrhebel 33 angeordnet. Der Fahrhebel 33 kann von beiden Fahrersitzen 24, 25 aus bedient werden.

Durch die Schwenkbarkeit der Lenkräder 26, 27 von einer Seite des Fahrstands zur anderen zusammen mit den drehbaren Fahrersitzen 24, 25 können insgesamt mindestens vier Bedienpositionen realisiert werden. Im Unterschied zu den bekannten Bodenverdichtungsmaschinen sind allerdings nur zwei Lenkeinrichtungen 26, 27 erforderlich. In Abhängigkeit von der gewählten Bedienposition wird festgelegt, welche Lenkeinrichtung 26, 27 für die Steuerung der Bewegung der Tandemwalze verantwortlich ist. Die beiden Bedienpulte 29 sind zu diesem Zweck über nicht näher dargestellte Leitungen verbunden.

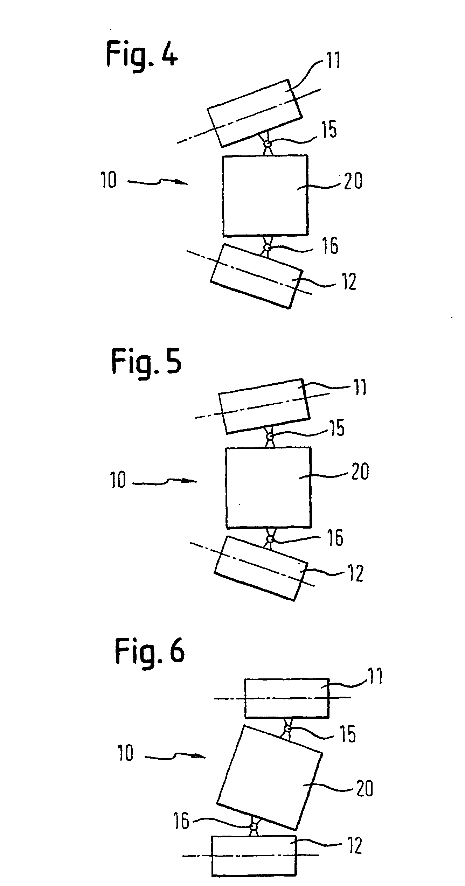

Die Figuren 4 bis 6 zeigen eine Draufsicht auf unterschiedliche Arbeitspositionen der Tandemwalze 10. Die beiden Walzen 11, 12 sind gleichzeitig und unabhängig voneinander schwenkbar. In Figur 4 ist eine Arbeitsposition dargestellt, bei der die Walzen 11, 12 für eine Links- oder Rechtskurve der Tandemwalze 10 verschwenkt sind. Sie weisen hierbei denselben Schwenkwinkel gegenüber dem Fahrstand 20 auf.

Figur 5 zeigt ebenfalls eine Linkskurve, wobei die Walze 12 um einen größeren Winkel verschwenkt ist als die Walze 11.

In Figur 6 ist eine als "Bandagenversatz" gezeichnete Arbeitsposition dargestellt. Die Walzen 11, 12 sind hierbei gegenüber dem Fahrstand 20 um denselben Winkel verschwenkt, aber parallel zueinander angeordnet. Die Tandemwalze 10 bewegt sich daher geradlinig. Da die Walzen 11, 12 seitlich zueinander versetzt sind, läßt sich eine wesentliche Vergrößerung der Arbeitsbreite der Tademwalze 10 erreichen. Auch in dieser Arbeitsposition kann der Bediener die Position der Tandemwalze 10 von seiner gewünschten Bedienposition aus genau überwachen und einhalten.

Die erfindungsgemäße Tandemwalze 10 mit den schwenkbaren Lenkeinrichtungen 26, 27 ermöglicht eine hohe Flexibilität und eine Vielzahl von Bedienpositionen. Der hierfür erforderliche Aufwand ist gering, so daß eine einfache Konstruktion erreicht wird.

## Patentansprüche

1. Bodenverdichtungsmaschine mit einem Fahrstand (20), der zwei nebeneinander angeordnete, drehbare Fahrersitze (24, 25) und zwei schwenkbar angeordnete Lenkeinrichtungen (26; 27) aufweist, und zwei Walzen (11; 12), die jeweils in einem mit dem Fahrstand (20) verbundenen Rahmen (13, 14) drehbar gelagert sind, **dadurch gekennzeichnet, dass** die Lenkeinrichtungen (26; 27) jeweils in einer horizontalen Ebene schwenkbar sind und dass die Rahmen (13, 14) der Walzen (11, 12) jeweils durch ein Knickgelenk (15, 16) schwenkbar mit dem Fahrstand (20) verbunden sind, wobei die Walzen (11, 12) gleichzeitig und unabhängig voneinander schwenkbar sind.

2. Bodenverdichtungsmaschine nach Anspruch 1, **dadurch gekennzeichnet, dass** die Lenkeinrichtungen (26; 27) in mindestens zwei Schwenklagen arretierbar sind.

3. Bodenverdichtungsmaschine nach Anspruch 1 oder 2, **dadurch gekennzeichnet, dass** die Lenkeinrichtungen (26; 27) jeweils an einem horizontalen Schwenkarm (28) angeordnet sind, der an einem Bedienpult (29) des Fahrstands (20) angelenkt ist.

4. Bodenverdichtungsmaschihe nach einem der Ansprüche 1 bis 3, **dadurch gekennzeichnet, dass** einer oder beide Fahrersitze (24, 25) in Seitenrichtung des Fahrstands (20) verstellbar sind.

5. Bodenverdichtungsmaschine nach einem der Ansprüche 1 bis 4, **dadurch gekennzeichnet, dass** zwischen den Fahrersitzen (24, 25) ein Fahrhebel (33) angeordnet ist.

## Claims

1. A pavement compacting machine comprising an operator's platform (20) including two rotatable operator seats (24, 25) arranged side by side and two swivelly mounted steering means (26; 27), further comprising two drums (11; 12) that are each rotatably mounted in a frame (13, 14) connected to the operator's platform (20), **characterized in that** each of the steering means (26; 27) are swivelling at a horizontal level and **in that** the frames (13, 14) of the drums (11, 12) are swivelly connected to the operator's platform (20) by an articulated joint (15, 16), wherein the drums (11, 12) can be swivelled simultaneously and independently of each other.

2. The pavement compacting machine as set forth in claim 1, **characterized in that** said steering means (26; 27) can be locked in at least two swivelling positions.

3. The pavement compacting machine as set forth in claim 1 or 2, **characterized in that** the steering means (26; 27) are each arranged at a horizontal swivel arm (28) that is mounted on an operator control desk (29) of said operator's platform (20).

4. The pavement compacting machine as set forth in any of claims 1 to 3, **characterized in that** one or both of said operator seats (24; 25) are designed laterally adjustable on said operator's platform (20).

5. The pavement compacting machine as set forth in any of claims 1 to 4, **characterized in that** a power lever (33) is arranged between said operator seats (24; 25).

## Revendications

1. Engin de compactage du sol, comportant un poste de conduite (20) qui présente deux sièges de conducteur (24, 25) rotatifs agencés l'un à côté de l'autre, et deux dispositifs de direction (26 ; 27) agencés avec faculté de pivotement, et deux rouleaux (11 ; 12) qui sont montés chacun avec faculté de rotation dans un cadre (13, 14) relié au poste de conduite (20), **caractérisé en ce que** les dispositifs de direction (26 ; 27) sont mobiles en pivotement chacun dans un plan horizontal, et **en ce que** les cadres (13, 14) des rouleaux (11, 12) sont reliés chacun avec faculté de pivotement au poste de conduite (20) par une articulation à flexion (15, 16), les rouleaux (11, 12) pouvant pivoter simultanément et indépendamment l'un de l'autre.

2. Engin de compactage du sol selon la revendication 1, **caractérisé en ce que** les dispositifs de direction (26 ; 27) sont susceptibles d'être bloqués dans au moins deux positions de pivotement.

3. Engin de compactage du sol selon l'une ou l'autre des revendications 1 et 2, **caractérisé en ce que** les dispositifs de direction (26 ; 27) sont agencés chacun sur un bras pivotant horizontal (28) qui est articulé sur un pupitre de manipulation (29) du poste de conduite (20).

4. Engin de compactage du sol selon l'une des revendications 1 à 3, **caractérisé en ce que** l'un des sièges de conducteur ou les deux (24, 25) est/sont réglable(s) en direction latérale du poste de conduite (20).

5. Engin de compactage du sol selon l'une des revendications 1 à 4, **caractérisé en ce qu'**un levier de conduite (33) est agencé entre les sièges de conducteur (24, 25).
